# EUROPÄISCHE PATENTSCHRIFT

(11) **EP 2 742 908 B1**
(45) Veröffentlichungstag und Bekanntmachung des Hinweises auf die Patenterteilung: **30.05.2018**
(21) Anmeldenummer: 12196788.9
(22) Anmeldetag: 12.12.2012
(51) Int. Cl.: A61C 13/093

(54) **Zahn mit einer Mulde in seiner Basalfäche**
Tooth with a recess in its base face
Dent avec un creu dans la face de base

(43) Veröffentlichungstag der Anmeldung: 18.06.2014
(73) Patentinhaber: Ivoclar Vivadent AG, 9494 Schaan (LI)
(72) Erfinder: Hagenbuch, Konrad, 9469 Haag (CH); Eder, Marion, 39012 Meran (IT); Bartagnolli, Martin, 39025 Naturns (IT); Frei, Christian, 39025 Naturns (IT); Lanbacher, Karl, 39023 Laas (IT); Mitterhofer, Martin, 39021 Latsch (IT); Gurschler, Martin, 39025 Naturns (IT); Wellenzohn, Christian, 39020 Kastelbell (IT)
(74) Vertreter: Baronetzky, Klaus

(56) Entgegenhaltungen:
- EP-A1- 1 454 597
- CH-A- 336 159
- DE-B- 1 075 794
- DE-C- 328 172
- FR-A- 657 069
- FR-A- 855 403
- US-A1- 2010 028 835
- US-A1- 2010 266 988

## Beschreibung

Die Erfindung betrifft einen Zahn, gemäß dem Oberbegriff von Anspruch 1 sowie einen Zahnsatz gemäß dem Oberbegriff von Anspruch 10.

Es ist seit längerem bekannt, als Zahnersatz künstlich Zähne zu verwenden, die aus verschiedenen Materialien hergestellt werden können, beispielsweise aus Keramik, aber auch aus Kunststoff oder aus Kompositmaterial. Derartige Zähne können als Teil einer Krone oder über ein sogenanntes Abutment und ein implantat im Mund des Patienten verwendet werden. Für die Herstellung derartiger Zähne werden üblicherweise Formen bereitgestellt, die den Zähnen - insofern angenähert an natürliche Zähne - unterschiedliche Formen geben, um bewusst eine natürliche Anmutung nachzuempfinden. Teilweise werden derartige Zähne auch noch beschliffen und sind typischerweise auch mehrschichtig aufgebaut, um dem Zahn ein transluzentes Aussehen zu geben. Schließlich werden sie auch häufig mit Malfarben nachbehandelt.

Zähne, die zusammen einen Zahnsatz bilden, wurden bereits zur Jahrhundertwende des 18./19. Jahrhunderts entwickelt. Sie werden typischerweise über ihre Unterseite, die sogenannte Basalfläche, befestigt, meist geklebt oder zusätzlich gestiftet, wobei entsprechende Bohrungen mechanischen Halt geben.

Seit etwa Ende der 90er Jahre hat sich eine sogenannte Basalmulde oder Mulde bewährt, die als leichte Vertiefung In der Basalfläche ausgebildet ist und geeignet Ist, die Befestigung über eine entsprechende Gegenform, beispielsweise mittels Kleben, zu ermöglichen. Hierbei ist es günstig, dass bei aufgetragenem Klebstoff noch eine gewisse Nachjustierung möglich ist, also eine exakte Einstellung der erwünschten Winkelstellung und übrigen Lage im Raum.

Derartige leicht gekrümmte Basalmulden sind seit längerem üblich, wozu beispielhaft auf die DE 198 29 639 A1 (vgl. Fig. 4, Bezugszeichen 12a) und die DE 199 45 354 A1 zu verweisen Ist. Ein weiteres Beispiel für derartige Zähne sind die SR Orthoslt-Zähne der Anmelderin.

Das Dokument EP 1 454 597 A1 zeigt einen Kunstzahn für Zahnprothesen mit einer als Bissfläche ausgebildeten Oberseite und einer Unterseite, die zum Einsetzen in ein Aufnahmebett einer Zahnprothese ausgebildet ist. Dabei ist weiter vorgesehen, dass an der Unterseite mindestens eine in mesio-distaler Richtung laufende Halterille ausgebildet ist. Dadurch soll eine formschlüssige Verbindung des Kunstzahns mit dem Aufnahmebett erreicht werden.

Zähne müssen in zahlreichen verschiedenen Größen und Formen hergestellt werden. In diesem Zusammenhang sel auf einen Frontzahn eines Kindes Im Vergleich zu einem Molaren eines Erwachsenen zu verweisen; vom Volumen her können die Unterschiede insofern mehr als das Fünffache betragen.

Dies bedingt eine entsprechend intensive Lagerhaltung und einen entsprechend großen Aufwand bei der Herstellung.

Um die Herstellung rationeller zu machen, werden typischerweise zahlreiche Zähne, beispielsweise 28 Zähne In entsprechenden Formausnehmungen einer Form gemeinsam hergestellt und beim Entformen aus der Form gelöst. Beim Entformen müssen die einzelnen Zähne richtig zugeordnet werden, wozu viel teure Handarbeit nötig Ist.

Demgegenüber liegt der Erfindung die Aufgabe zugrunde, einen Zahn gemäß dem Oberbegriff von Anspruch 1 sowie einen entsprechenden Zahnsatz herzustellen, der hinsichtlich der Handhabung, aber auch der Bearbeitbarkeit optimiert ist, ohne dass die günstigen optischen und Festigkeits-Eigenschaften bekannter Zähne aufgegeben würden.

Diese Aufgabe wird erfindungsgemäß durch Anspruch 1 gelöst. Vorteilhafte Weiterbildungen ergeben sich aus den Unteransprüchen.

Ein Zahn mit einer Basalfläche und einer Mulde wie in Anspruch 1 definiert Ist multlfunktional, denn er ermöglicht die sichere Aufnahme der Zähne, beispielsweise beim Bemalen und belm Abfräsen von Gusskanten, aber auch die sichere Lagefixierung beim Entformen der Formhälften von Zähnen, die in Mehrfachanordnung gegossen werden. Während derartige Zähne beim Öffnen der Formhälften aufgrund der Haftung an der oberen Formhälfte häufig durchelnanderpurzelten, was eine mühselige Handsortierung erforderte, wirkt nun die Mulde gleichsam wie eine Art Niederhalter in der Form. Nachdem die Zähne insofern sicher zugeordnet verbleiben, Ist auch eine maschinelle Sortierung möglich.

Durch die erfindungsgemäße Mulde lässt sich in überraschend einfacher Weise eine Standardisierung der Aufnahme realisieren, selbstverständlich nach Größen der Zähne gestuft. Durch die erfindungsgemäß besondere Napfform mit einer nicht-kreisförmigen basalen Mulde lässt sich gleichsam automatisch eine Verdrehsicherung erzeugen und damit die Retentionseigenschaften der Mulde verbessern.

Ferner ist es bei Drei- oder Mehrschichtzähnen günstig, dass die Mulde im Bereich des Dentinmaterials ausgeprägt ist, so dass die transluzente Wirkung des Enamelmaterials vollständig erhalten bleibt. In diesem Zusammenhang ist es in vorteilhafter weiterer Ausgestaltung günstig, wenn die Basalrandfläche, also die Fläche der Basalfläche, die die Mulde umgibt, eine im Wesentlichen gleichbleibende Breite aufweist, so dass die Mulde auch insofern der Außenkontur des Zahns folgt.

Durch die "aufrechte" Realisierung des Zahns beim Spritzguss lassen sich auch besonders günstig und leicht Schichten in einer beliebigen Schichtstärke auftragen, wobei die Schichtstärke dann in an sich bekannter Weise dem Je bestehenden Spritzgieß-Hohlraum zur je gewählten Gegenform entspricht, und wobei der Aufbau der Schichten kurzerhand basierend auf dem Basalbereich des Zahnes, der die Mulde aufweist, realisiert Ist, und wobei die erste Schicht auch die Mulde umfasst.

Erfindungsgemäß ist es insofern günstig, wenn die Mulde sich sowohl mit gleichmäßiger Tiefe, Je betrachtet von der benachbarten Stelle der Basalrandfläche, in die Basalfläche hineinerstreckt, als auch die Basalrandfläche im Wesentlichen gleich breit Ist. Dies führt automatisch zu einer nicht-kreisförmigen Reallsierung der Mulde, unter der Voraussetzung, dass der betreffende Zahn nicht kreisförmig ist.

In vorteilhafter Ausgestaltung ist eine Hinterschneidung oder ein Vorsprung in einer Muldenflanke vorgesehen, die eine noch bessere Retention erlaubt. In weiterer vorteilhafter Ausgestaltung ist es vorgesehen, dass der Übergang zwischen Basalfläche und Muldenflanke als Hohlkehle ausgebildet ist.

In vorteilhafter Ausgestaltung ist es vorgesehen, dass die Mulde (18) von einer Basalrandfläche (20) umgeben Ist, deren minimale Breite etwa der Tiefe der Mulde (18) entspricht und insbesondere etwa 1 mm beträgt oder diese um 30 % unterschreitet oder überschreitet.

In vorteilhafter Ausgestaltung ist es vorgesehen, dass die Mulde (18) ein Volumen aus der Basalfläche (16) ausnimmt, das mindestens einem Zwanzigstel des Volumens des Zahns entspricht.

Weitere Vorteile, Einzelheiten und Merkmale ergeben sich aus der nachfolgenden Beschreibung dreier Ausführungsbeispiele anhand der Zeichnungen.

Es zeigen:
- Fig. 1: eine schematische Schnittansicht durch einen Zahn In einer Ausführungsform, die erläuterungshalber beigefügt ist;
- Fig. 2: eine teilweise aufgebrochene perspektivische Ansicht des Zahns gemäß Fig. 1;
- Fig. 3: eine Unteransicht eines erfindungsgemäßen Molaren In einer Ausführungsform;
- Fig. 4: der Molar gemäß Fig. 3 in seitlicher Schnittansicht;
- Fig. 5: ein Schneidezahn in einer Unteransicht als Ausführungsform eines Zahns die erläuterungshalber beigefügt ist; und
- Fig. 6: der Schneidezahn gemäß Fig. 5 in teilweise aufgebrochener Seitenansicht.

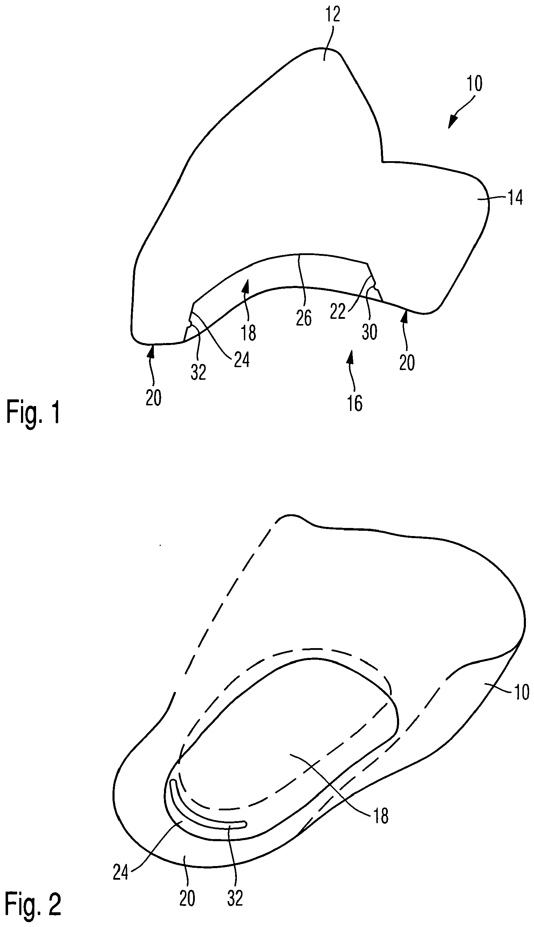

Der in Fig. 1 dargestellte Zahn 10 weist In an sich bekannter Weise zwei Höcker 12 und 14 auf, Auf der Unterseite des Zahns, also insofern den Höckern 12 und 14 gegenüberliegend, erstreckt sich eine Basalfläche 16. Diese Ist von sich aus - also auch ohne die Erfindung - mittig zurückspringend und insofern konkav ausgebildet. In die Basalfläche 16 ist als napfförmige Vertiefung eine Mulde 18 eingeschnitten, die in besonderer Welse ausgebildet ist.

Seitlich der Mulde erstreckt sich die Basalrandfläche 20, im Grunde umlaufend um die Mulde 18, und zwar mit einer im Wesentlichen gleicher Breite. An die Basalrandfläche 20 schließt sich eine Muldenflanke 22 bzw. 24 an. Diese erstreckt sich gegenüber der Basalrandfläche 20 in der Darstellung gemäß Fig. 1 In einem linken Teil, also als Muldenflanke 24, in einem Winkel von etwa 75° zur Basalrandfläche und im rechten Teil, also als Muldenflanken 22, In einem Winkel von etwa 50° zur dortigen Basalrandfläche 20. Angrenzend an die Muldenflanken 22 und 24 ist der Muldenboden 26 ausgebildet. Angrenzend an die Muldenflanke 22 erstreckt sich der Muldanboden unter Bildung eines Gegenwinkels dort in einem Winkel von etwa 50° zur Muldenflanke 22, und angrenzend an die Muldenflanken 24 erstreckt sich der Muldenboden 26 in einem Winkel von etwa 45°. Dies deshalb, da die Basalrandfläche 20 im Bereich der Muldenflanke 24 stärker gekrümmt Ist, so dass aufgrund des Rücksprungmaßes der Mulde 18 und der Insofern stattfindenden Verlagerung nach einwärts, also zur Zahnachse hin, der Winkel zwischen Muldenflanke 24 und Muldenboden 26 dort geringer ist.

Grundsätzlich gilt jedoch, dass der Muldenboden 26 In seinem Verlauf der Basalfläche 16 folgt. Dementsprechend Ist die Mulde 18 über ihren gesamten Verlauf im Wesentlichen gleich tief, und in der Zeichnung folgt die Kontur des Muldenbodens 26 der Basalrandfläche 20.

In der Ausführungsform gemäß Fig. 1 und 2 ist eine einwärts vorspringende Rippe 30 und eine einwärts vorspringende Rippe 32 an den Muldenflanken 22 und 24 ausgebildet, die je eine Hinterschneidung bilden. Es versteht sich, dass anstelle dessen beliebige andere hinterschneldungsbildende Formen möglich sind. Die Rippen 30 bzw. 32 erlauben eine noch bessere Verankerung des Zahns 10.

Die Mulde 18 hat eine deutlich von der Kreisform, aber auch von einer Ellipsenform abweichende Form. Dies ist In Fig. 2 gut ersichtlich. Dort ist auch die Rippe 32 dargestellt, und es ist ersichtlich, dass sich diese gleichsam über die gesamte Stirnseite der Mulde 18 erstreckt.

Es versteht sich, dass der Neigungswinkel der Muldenflanken 22 und 24 in weiten Bereichen an die Erfordernisse anpassbar ist. Beispielsweise kann der Neigungswinkel steiler gewählt werden, wenn eine hinterschneidungsfreie Ausgestaltung erwünscht ist.

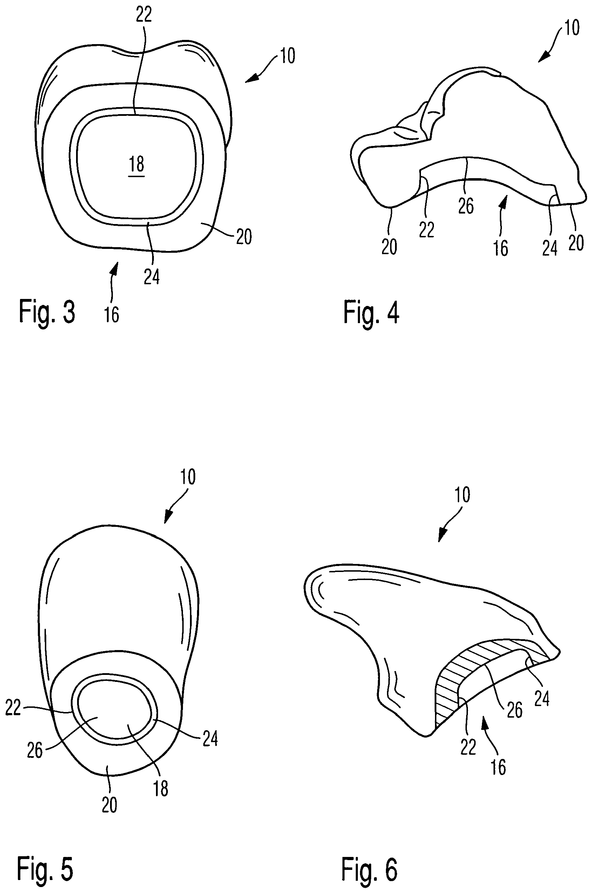

Eine derartige Ausgestaltung ist aus der Ausführungsform der Erfindung ersichtlich. Flg. 3 und 4 zeigen unterschiedliche Ansichten dieser Ausführungsformen. Auch hier ist die Mulde 18 nicht kreisförmig und nicht rotationssymmetrisch, so dass eine positionssichere Lagerung des Zahns 10 möglich ist. Es ist aus Fig. 3 gut ersichtlich, dass die Basalrandfläche 20 Ober ihre gesamte Erstreckung im Wesentlichen gleich breit ist, mit einer Schwankungsbreite von +/ - 10 %. Die Mulde 18 nimmt einen großen Teil der Basalfläche 16 ein, von der Fläche her mehr als 50 %. Dennoch ist der Rand, also die Basalrandfläche und sämtliches Zahnmaterial, das die Muldenflanken 22 bzw. 24 nach außen umgibt, so dimensioniert, dass eine sichere Lagerung möglich ist.

Aus Fig. 4 ist ersichtlich, dass die Muldenflanke 22 sich In einem steileren Winkel zur Basalrandfläche 20 erstreckt als bei der Ausführungsform gemäß Fig. 1. Der Winkel der Muldenflanke 22 zur benachbarten Basalrandfläche 20 beträgt etwa 70°, und der Winkel der Muldenflanken 24 zur Basalrandfläche 20 beträgt etwa 85°, so dass dort eine nahezu senkrechte Erstreckung vorliegt. Erfindungsgemäß Ist bei dieser Lösung die Basalfläche 16 im Schnitt im Wesentlichen S-förmig geschwungen. Dementsprechend Ist auch der Muldenboden 26 diesem Verlauf folgend S-förmig geschwungen und erstreckt sich auch hier parallel zur Basalfläche 16.

Aus Fig. 5 ist ein Schneidezahn mit einer Mulde 18 ersichtlich, die sich napfförmig erstreckt, also einen flachen bzw. der Basalfläche 16 im Verlauf folgenden Muldenboden 26 aufweist, und demgegenüber vergleichsweise steile Muldenflanken 22 und 24.

Die Basalrandfläche 20 hat umlaufend im Wesentlichen die gleiche Breite, und die Mulde 18 ist dann kreissymmetrisch.

Aus Fig. 6 ist ersichtlich, dass auch bei dieser Ausgestaltung vergleichsweise große Muldenflankenwinkel der Muldenflanken 22 und 24 realisiert sind, wobei der Muldenflankenwinkel der Muldenflanke 22 zur Basalfläche 16 etwa 60° beträgt, und derjenige der Muldenflanke 24 90°.

Es Ist grundsätzlich auch möglich, den Muldenwinkel mindestens an einer Stelle etwas größer als 90° zu wählen, um so eine Hinterschneidung zu erzeugen.

Auch hier verläuft der Muldenboden 26 parallel zur Basalfläche 16, so dass eine gleichbleibende Tiefe der erfindungsgemäßen Mulde vorliegt.

## Patentansprüche

1. In einer Form hergestellter Zahn aus Keramik, Komposit, oder Kunststoff, mit einer Basalfläche (16) des Zahnes, die eine Mulde (18) aufweist, wobei die insbesondere elliptische oder kreisförmige Mulde (18) an die Basalfläche (16) angepasst ist und eine Muldenflanke (22, 24) aufweist, die sich mindestens teilweise In einem Winkel von mehr als 45 Grad zur benachbarten Basalfläche (16) erstreckt, wobei die Mulde (18) einen Muldenbodan (26) aufweist, **dadurch gekennzeichnet, dass** die Basalfläche (16) Im Schnitt im Wesentlichen S-förmig geschwungen ist, dementsprechend auch der Muldenboden (26) diesem Verlauf folgend S-förmig geschwungen Ist und sich parallel zur Basalfläche 16 erstreckt, und dass die Mulde (18) von einer Basalrandfläche (20) umgeben ist, deren Breite über ihren Verlauf um die Mulde (18) herum betrachtet im Wesentlichen gleich breit bleibt.

2. Zahn nach Anspruch 1, **dadurch gekennzeichnet, dass** die Mulde (18) im Wesentlichen napfförmig ausgebildet ist und im Wesentlichen senkrecht zu dem Muldenboden (26) erstreckende Muldenflanken (22, 24) aufweist.

3. Zahn nach einem der Ansprüche 1 oder 2, **dadurch gekennzeichnet, dass** sich eine Muldenflanke (22, 24) angrenzend an den Muldenboden (26) mindestens teilweise In einem Winkel von mehr als 60 Grad oder 70 Grad, insbesondere nahezu senkrecht, erstreckt.

4. Zahn nach einem der vorhergehenden Ansprüche, **dadurch gekennzeichnet, dass** mindestens eine Muldenflanke (22, 24) mindestens einen Hinterschnitt aufweist, welcher insbesondere für die Bereitstellung einer vorgegebenen Retentionskraft ausgebildet Ist und dass die Hinterschneidung an einer vorgegebenen Höhe an der Muldenflanke (22, 24) ausgebildet ist.

5. Zahn nach einem der vorhergehenden Ansprüche, **dadurch gekennzeichnet, dass** der Muldenboden (26) mindestens teilweise konvex ausgebildet ist, und dass der Radius der Konvexität mindestens 50 % der maximalen Erstreckung der Basalfläche (16) beträgt, insbesondere größer als 100 % der maximalen Fläche der Basalfläche (16) ist.

6. Zahn nach einem der vorhergehenden Ansprüche, **dadurch gekennzeichnet, dass** ein Übergang zwischen Basalfläche (16) und Muldenflanke (22, 24) als Hohlkehle ausgebildet ist, mit einem Radius, der deutlich kleiner als die Tiefe der Mulde (18) ist, insbesondere etwa ein Zehntel bis ein Drittel dieser.

7. Zahn nach einem der vorhergehenden Ansprüche,**dadurch gekennzeichnet, dass** die minimale Breite der Basalrandfla̅che (20) etwa der Tiefe der Mulde (18) entspricht und insbesondere etwa 1 mm beträgt oder diese um 30 % unterschreitet oder überschreitet.

8. Zahn nach einem der vorhergehenden Ansprüche, **dadurch gekennzeichnet, dass** die Mulde (18) ein Volumen aus der Basalfläche (16), das mindestens einem Zwanzigstel des Volumens des Zahns entspricht, ausnimmt.

9. Zahn nach einem der vorhergehenden Ansprüche, **dadurch gekennzeichnet, dass** sich die Muldenflanke (22, 24) mindestens teilweise In einem Winkel von mehr als 60 Grad oder 70 Grad zur benachbarten Basalrandfläche (16) erstreckt.

10. Zahnsatz, gebildet aus Zähnen gemäß Anspruch 1, die zuelnander passende, jedoch sich voneinander unterscheidende Größen aufweisen.

11. Zahnsatz nach Anspruch 10, **dadurch gekennzeichnet, dass** der Muldendurchmesser innerhalb eines Zahnsatzes unterschiedlich und an die Gro̅ße des je vorliegenden Zahns angepasst ist, so dass die Breite der Basalrandfläche (20) im Wesentlichen gleich bleibt.

## Claims

1. A tooth made of ceramic, composite, or plastic materials, fabricated in a mold, having a basal surfaces(16) of the-tooth, said basal surface comprising a well (18), wherein said especially elliptic or circular well (18) Is adapted to ta basal surface (16) and comprising a well flank (22, 24), which at least partially extends in an angle of more than 45 degrees In relation to the adjacent basal surface (16), wherein the well (18) comprises a well bottom (26), **characterized in that** the basal surface (16), as seen in a sectional view, essentially is curved in a S-shaped manner, accordingly, also the well bottom (26) is curved in a S-shaped manner while following this course, and extends parallel to the basal surface 16, and **in that** the well (18) is surrounded by a basal edge surface (20), the width thereof remains essentially the same, as viewed throughout its course around the well (18).

2. The tooth according to claim 1, **characterized in that** the well (18) essentially is formed in a bowl-shaped manner and comprising well flanks (22, 24) extending essentially perpendicular to the well bottom (25).

3. The tooth according to one of the Claims 1 or 2, **characterized in that** a well flank (22, 24) extends adjacent to the well bottom (26) at least partially in an angle of more than 60 degrees or 70 degrees, and especially extends almost perpendicular.

4. The tooth according to one of the preceding Claims, **characterized in that** at least a well flank (22, 24) comprises at least one undercut, which especially Is formed for providing a predetermined retention force, and **in that** the undercut is formed in a predetermined height at the well flank (22, 24).

5. The tooth according to one of the preceding Claims, **characterized in that** the well bottom (26) is formed at least partially convex, and that the radius of the convexity is at least 50 % of the maximum extension of the basal surface (16), especially larger than 100 % of the maximum surface of the basal surface (16).

6. The tooth according to one of the preceding Claims, **characterized in that** a passage between the basal surface (16) and the well flank (22, 24) is formed as a deep chamfer having a radius, which is significantly smaller than the depth of the well (18), and especially is about one-tenth to one-third thereof.

7. The tooth according to one of the preceding Claims, **characterized in that** the minimal width of the basal edge surface (20) corresponds to about the depth of the well (18) and especially Is about 1 mm, or is above or below said depth by 30%.

8. The tooth according to one of the preceding Claims, **characterized in that** the well (18) occupies a volume of the basal surface (16) that corresponds to at least one-twentieth of the volume of the tooth.

9. The tooth according to one of the preceding Claims, **characterized in that** the well flank (22, 24) extends at least partially in an angle of more than 60 degrees or 70 degrees in relation to the adjacent basal edge surface (16).

10. A tooth set formed of teeth according to Claim 1, which matches each other, but comprising sizes different from each other.

11. The tooth set according to Claim 10, **characterized in that** the well diameter within a tooth set is differently adopted to the size of the respective tooth present, so that the width of the basal edge surface (20) essentially remains the same.

## Revendications

1. Dent en céramique, composite ou plastique fabriquée dans une forme, où une surface basale (16) de la dent présente une cavité (18), où la cavité (18), en particulier circulaire ou elliptique, est adaptée à la surface basale (16) et présente un flanc de cavité (22, 24), qui s'étend, au moins en partie, à un angle supérieur à 45 degrés par rapport à la surface basale (16) voisine, où la cavité (18) présente un fond de cavité (26), **caractérisée en ce qu'**en moyenne la surface basale (16) est essentiellement incurvée en S, par conséquent, le fond de cavité (26) suivant ce tracé est aussi incurvée en S et s'étend parallèle à la surface basale (16) et que la cavité, (18) est entourée par une surface basale (20) périphérique, dont la largeur, vue depuis son tracé autour de la cavité (18), reste essentiellement, constante.

2. Dent selon la revendication 1 **caractérisée en ce que** la cavité (13) est formée essentiellement en cuvette et présente des flancs de cavité (26) essentiellement verticaux par rapport au fond de cavité (22, 24).

3. Dent selon l'une des revendications 1 ou 2, **caractérisé en ce qu'**un flanc de cavité (22, 24) à proximité du fond de la cavité (26), s'étend au moins partiellement à un angle supérieure à 60 à 70 degrés, en particulier presque verticalement.

4. Dent selon l'une des revendications précédentes, **caractérisée en ce qu'**au moins un flanc de cavité (22, 24) présente au moins une contre-dépouille, qui est conçu en particulier pour fournir une force de rétention prédéterminée et que la contre-dépouille est formée à une hauteur prédéterminée sur le flanc de cavité (22, 24).

5. Dent selon l'une des revendications précédentes, **caractérisée en ce que** le fond de la cavité (26) est formé au moins partiellement convexe, et que le rayon de la convexité est au moins 50% de l'extension maximale de la surface basale (16), en particulier est supérieur à 100% de la superficie maximale de la surface basale (16).

6. Dent selon l'une des revendications précédentes, **caractérisée en ce qu'**une transition entre la surface basale (15) et le flanc de la cavité (22, 24) est formée comme une cannelure, avec un rayon qui est nettement plus petit que la profondeur de la cavité (18), en particulier environ un dixième à un tiers de celle-ci.

7. Dent selon l'une des revendications précédentes, **caractérisée en ce que** la largeur minimale de la surface basale périphérique (20) correspond environ à la profondeur de la cavité (18) et mesure en particulier environ 1 mm ou est de l'ordre de 30% inférieur ou supérieur à celle-ci.

8. Dent selon l'une des revendications précédentes, **caractérisée en ce que** la cavité (18) occupe un volume de la surface basale (16), qui représente au moins un vingtième du volume de la dent.

9. Dent selon l'une des revendications précédentes, **caractérisé en ce que** le flanc de la cavité (22, 24) s'étend au moins en partie à un angle de plus de 60 degrés ou 70 degrés par rapport à la surface basale périphérique (16) voisine.

10. Jeu de dents, formé à partir de dents selon la revendication 1, qui présente des tailles, qui correspondent les unes aux autres mais se distinguent par les différences entre elles.

11. Jeu de dents selon la revendication 10, **caractérisé en ce que** le diamètre de la cavité au sein d'un ensemble de dents est adapté de manière différenciée en fonction de la taille de la dent présente, afin de maintenir la largeur de la surface basale périphérique (20) essentiellement constante.
